# FASCICULE DE BREVET EUROPEEN

(11) **EP 3 603 235 B1**
(45) Date de publication et mention de la délivrance du brevet: **10.03.2021**
(21) Numéro de dépôt: 18715230.1
(22) Date de dépôt: 23.03.2018
(51) Int. Cl.: H04W 56/00, G01S 5/10

(54) **MÉTHODE DE LOCALISATION UWB AVEC SYNCHRONISATION PAR CANAL AUXILIAIRE**
UWB-LOKALISIERUNGSVERFAHREN MIT HILFSKANALSYNCHRONISATION
UWB LOCATING METHOD WITH AUXILIARY CHANNEL SYNCHRONISATION

(30) Priorité: 24.03.2017 FR 1752482
(43) Date de publication de la demande: 05.02.2020
(73) Titulaire: MAPLE HIGH TECH, 31100 Toulouse (FR)
(72) Inventeur: TANCEREL, Ludovic, 31200 Toulouse (FR); BEGOC, William, 31100 Toulouse (FR); PAVOT, Christophe, 31860 Labarthe Sur Leze (FR)
(74) Mandataire: Brevalex
(86) Numéro de dépôt international: PCT/FR2018/050715
(87) Numéro de publication internationale: WO 2018/172721

(56) Documents cités:
- WO-A2-2012/059903
- FR-A1- 2 924 818
- US-A1- 2008 186 231
- US-A1- 2014 035 732
- Kasun Maduranga Silva Thotahewa ET AL: "MAC Protocols for UWB-Based WBAN Applications" In: "Ultra Wideband Wireless Body Area Networks", 18 avril 2014 (2014-04-18), Springer International Publishing, Cham, XP055432807, ISBN: 978-3-319-05287-8 pages 19-36, DOI: 10.1007/978-3-319-05287-8_2, le document en entier

## Description

### DOMAINE TECHNIQUE

La présente invention concerne de manière générale le domaine de la localisation par un réseau de capteurs sans fil ou WSN (*Wireless Sensor Network)* et plus particulièrement un réseau utilisant une transmission UWB (*Ultra Wide Band*)*.*

### ÉTAT DE LA TECHNIQUE ANTÉRIEURE

Les systèmes de localisation par réseau de capteurs (WSN) constituent une alternative séduisante aux systèmes de positionnement satellitaires (GPS, Galileo), tout particulièrement pour un environnement *indoor.*

On rappelle qu'un réseau WSN est un réseau sans fil comportant généralement un grand nombre de nœuds capables d'effectuer des mesures et de les transmettre de manière autonome. La position des nœuds, encore dénommés quelquefois points d'accès (APs), dans un tel réseau n'est pas nécessairement connue. Lorsqu'un nœud du réseau connaît sa position, celui-ci est dénommé « nœud-ancre » (*anchor node*) ou simplement ancre (*anchor*).

La technologie UWB, en raison de sa transmission très large bande et par conséquent de sa très fine résolution temporelle, se prête bien aux applications de localisation. Il est ainsi connu de déterminer la position d'une étiquette (ou *tag*) à partir des différences de temps d'arrivée ou TDOA (*Time Difference Of Arrival*) d'un signal UWB émis par cette étiquette et reçu par les différents nœuds-ancres. Toutefois, la localisation n'est possible que si les nœuds du réseau, à tout le moins les nœuds-ancres à portée de cette étiquette, sont synchronisés (de manière à pouvoir calculer les différences de temps d'arrivée).

Une première méthode de synchronisation consiste à utiliser un réseau filaire entre les nœuds-ancres. Cependant, l'installation d'un réseau filaire est malcommode et suppose que la topologie du réseau reste inchangée.

Le document US 2008/186231 A1 concerne une méthode de localisation de type TDOA d'une étiquette par un réseau de capteurs comprenant une ancre de référence et une pluralité d'ancres synchronisées avec l'ancre de référence. L'ancre de référence est capable d'émettre un signal à bande étroite en sus d'un signal UWB , les signaux UWB et les signaux WLAN étant émis dans une relation synchrone.

La demande internationale WO-A-2012/059903 décrit une méthode de synchronisation de nœuds dans un réseau de communication UWB pour localiser une étiquette. La synchronisation des nœuds intervient ici au moyen d'un message de synchronisation transmis par une ancre coordinatrice aux autres nœuds et le renvoi, par ces derniers, de messages de réponse horodatés par les temps d'arrivée des messages de synchronisation. Un dispositif de localisation centralisée CLE (*Central Location Engine*) détermine à partir du temps d'émission, des temps d'arrivée et des temps de vol entre les nœuds, le glissement d'horloge entre les nœuds et l'ancre coordinatrice ce qui permet de synchroniser les nœuds du réseau.

En tout état de cause, la localisation d'une étiquette fait appel à l'émission d'une impulsion ou d'un message bref, encore appelé message clap ou « *blink* ». Ce message clap est reçu par les nœuds-ancres préalablement synchronisés avec l'ancre coordinatrice. Les différences de temps d'arrivée sont ensuite déterminées par l'ancre coordinatrice, voire par un serveur distinct, et la position de l'étiquette est déduite de ces différences de temps d'arrivée.

L'émission d'un message clap ne peut toutefois pas intervenir à n'importe quel moment, faute de quoi ce message clap pourrait entrer en collision avec un message de synchronisation voire avec un message clap émis par une autre étiquette, lors de sa réception par un nœud-ancre. Ainsi, pour éviter les collisions, l'étiquette doit synchroniser son émission par rapport à une trame temporelle partagée par l'ensemble des nœuds du réseau. Dans le standard IEEE 802.15.4 (en mode balise), cette trame temporelle est définie par un signal de balise émis périodiquement par l'ancre coordinatrice. L'étiquette écoute le signal de balise et transmet un message de clap dans un intervalle de temps qui lui est alloué au sein de la trame temporelle. Cette écoute du signal de balise est toutefois fortement consommatrice en énergie, notamment en raison de la complexité du récepteur UWB, ce alors même que les ressources en énergie d'une étiquette sont très limitées. On doit alors recourir à des batteries présentant un encombrement important et un coût élevé.

Le but de la présente invention est de proposer une méthode de localisation UWB par un réseau de capteurs dans laquelle la synchronisation de l'émission des étiquettes est moins consommatrice en énergie que dans l'état de la technique.

### EXPOSÉ DE L'INVENTION

La présente invention est définie par une méthode de localisation d'une étiquette par un réseau de capteurs, le réseau de capteurs comprenant une ancre de référence et une pluralité d'ancres synchronisées avec ladite ancre de référence, l'ancre de référence émettant un signal UWB comprenant des premières balises à intervalles réguliers, l'intervalle entre deux premières balises successives définissant une première trame temporelle comprenant des intervalles de temps élémentaires pendant lesquels les capteurs et l'étiquette peuvent accéder à un canal UWB, ladite méthode comprenant en outre:
- la transmission par l'ancre de référence d'un signal à bande étroite sur un canal auxiliaire, le signal à bande étroite comprenant des secondes balises à intervalles réguliers, l'intervalle entre deux secondes balises successives définissant une seconde trame temporelle, les secondes balises étant synchrones avec les premières balises, l'ancre de référence transmettant pendant la seconde trame temporelle un index d'intervalle élémentaire à ladite étiquette ;
- la réception par ladite étiquette dudit index sur le canal auxiliaire et la transmission par celle-ci d'un message de clap sur le canal UWB pendant un intervalle élémentaire associé audit index ;
- la réception par lesdites ancres du message de clap et la détermination des différences de temps d'arrivée de ce message aux différentes ancres ;
- le calcul de la position de l'étiquette à partir des différences de temps d'arrivée ainsi déterminées.

Ladite étiquette est avantageusement équipée d'un émetteur/ récepteur bande étroite adapté à émettre/ recevoir sur le canal auxiliaire et met en veille son récepteur bande étroite après avoir reçu l'index d'intervalle élémentaire alloué par l'ancre de référence.

Ladite étiquette peut être équipée en outre d'un émetteur UWB sans récepteur UWB associé.

Selon un mode de réalisation, ladite étiquette est équipée d'un détecteur de mouvement et celle-ci transmet une requête d'index d'intervalle élémentaire au nœud de référence lorsqu'un mouvement de l'étiquette est détecté.

Dans ce cas, ladite étiquette peut n'émettre la requête d'index d'intervalle élémentaire que si ledit mouvement dure plus d'un laps de temps prédéterminé.

Si l'ancre de référence ne reçoit pas de messages de clap de l'étiquette pendant un intervalle de durée prédéterminée, l'ancre de référence libère alors l'index d'intervalle élémentaire alloué à l'étiquette.

Selon un exemple d'implémentation, le signal UWB est conforme à la couche physique normalisée par le standard IEEE 802.15.4a et les accès au canal UWB sont conformes à la couche MAC normalisée par ce standard.

En outre, le signal à bande étroite peut être conforme à la couche physique normalisée par le standard IEEE 802.15.4 et les accès au canal auxiliaire conformes à la couche MAC normalisée par ce standard.

Le signal à bande étroite peut être par exemple un signal RFID ou un signal Bluetooth Low Energy.

### BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :
La Fig. 1 représente schématiquement un réseau de capteurs pour la localisation d'une étiquette selon la méthode de localisation de l'invention ;
La Fig. 2 représente schématiquement une supertrame UWB et une supertrame bande étroite utilisées par la méthode de localisation selon un premier mode de réalisation de l'invention ;
La Fig. 3 représente schématiquement un ordinogramme de la méthode de localisation selon un premier mode de réalisation de l'invention ;
Les Figs. 4A-4B représentent un exemple de séquences de supertrames UWB et de supertrames bande étroite utilisées par une méthode de localisation selon un second mode de réalisation de l'invention.

### EXPOSÉ DÉTAILLÉ DE MODES DE RÉALISATION PARTICULIERS

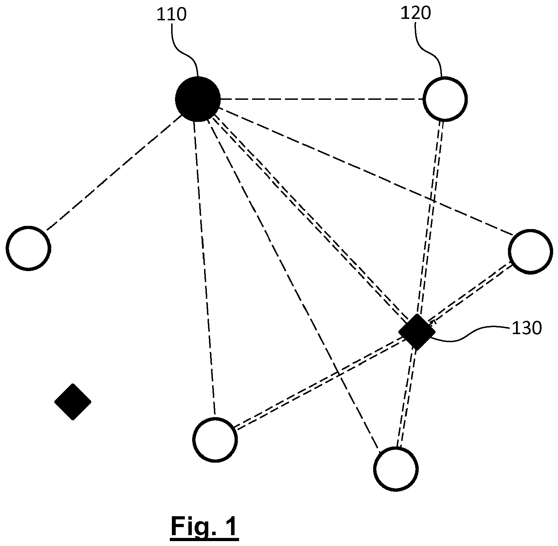

On considérera dans la suite un réseau de capteurs sans fil (WSN) de topologie quelconque, dont un exemple est représenté schématiquement en Fig. 1. Ce réseau comprend au moins une ancre coordinatrice 110 et une pluralité de nœuds-ancres 120. On rappelle que les positions des nœuds-ancres et de l'ancre coordinatrice sont déterminées et connues. Le réseau peut comprendre plusieurs ancres coordinatrices organisées de manière arborescente, chaque ancre coordinatrice étant responsable de la synchronisation d'un sous-ensemble de nœuds-ancres et étant elle-même synchronisée au moyen d'une ancre coordinatrice de niveau supérieur. L'ancre coordinatrice à la racine de l'arborescence (niveau 0) est responsable de la synchronisation de l'ensemble des nœuds du réseau et dénommée pour cette raison ancre de référence. Afin de simplifier la description mais sans perte de généralité, nous supposerons dans la suite, en absence de mention contraire, que le réseau ne comporte qu'une seule ancre coordinatrice (et donc ancre de référence).

Les nœuds-ancres 120 sont synchronisés avec l'ancre de référence, 110, au moyen d'un signal de balise, dénommé plus simplement balise, transmis périodiquement par le nœud de référence. Plus précisément, l'ancre de référence transmet en mode broadcast un signal UWB comprenant des premières balises à intervalles réguliers, l'intervalle entre deux premières balises successives définissant une première trame temporelle, encore dénommée supertrame (*superframe*) UWB. Les nœuds-ancres 120 (et de manière générale les nœuds-ancres du réseau qui ne sont pas des ancres coordinatrices) ne transmettent pas de balises.

Chaque ancre 120 possédant sa propre horloge locale, la synchronisation permet d'obtenir une relation stable dans le temps entre les horloges locales et l'horloge du nœud de référence. Selon un mode particulier, après synchronisation, les horloges locales ont la même fréquence et la même phase que l'horloge du nœud de référence. Il convient toutefois de noter que la synchronisation des ancres ne fait pas partie de la présente invention. Cette synchronisation peut être réalisée par exemple comme décrit dans la demande internationale précitée ou bien comme décrit dans la demande n° FR 16 55026 déposée par la demanderesse et incorporée ici par référence.

L'ancre de référence est également adaptée à transmettre un signal à bande étroite sur un canal auxiliaire. Par signal à bande étroite, on entend un signal dont la largeur de bande est au moins dix fois inférieure et de préférence au moins cent fois inférieure à la largeur de bande du signal UWB.

Le signal à bande étroite comprend des secondes balises à intervalles réguliers, l'intervalle entre deux secondes balises successives définissant une seconde trame temporelle, encore dénommée supertrame (*superframe*) bande étroite.

L'ancre de référence 110 et les nœuds-ancres 120 sont équipés d'émetteur/récepteur UWB. Selon l'invention, l'ancre de référence est en outre équipée d'un émetteur/récepteur bande étroite pour émettre/recevoir sur le canal auxiliaire.

A titre d'exemple, le signal UWB sera transmis selon les spécifications du protocole IEEE 802.15.4a dans le canal 0 occupant la bande spectrale de 249,6 à 749,6 MHz ou dans l'un des quatre canaux 1-4 occupant la bande spectrale de 3,1 à 4,8 GHz voire encore dans l'un des onze canaux 5-15 occupant la bande spectrale de 5,8 à 10,6 GHz.

De manière similaire, et toujours à titre d'exemple, le signal à bande étroite sera transmis selon les spécifications du protocole IEEE 802.15.4 (ZigBee) soit sur le canal sub-GHz soit dans l'un des canaux 11-26 occupant la bande spectrale 2400-2483,5 MHz, avec une largeur de bande de 5MHz.

Selon un exemple avantageux, le signal UWB sera transmis sur le canal 2 ou le canal 5 (respectivement à 3,9 GHz et 6 GHz) et le signal bande étroite sur l'un des canaux 11-26 (2400-2483,5 MHz), sans présenter de risque d'interférence entre le canal UWB et le canal bande étroite.

Alternativement, le signal à bande étroite pourra être un signal RFID ou un signal Bluetooth Low Energy (BLE).

Quel que soit le type de canal auxiliaire retenu, les secondes balises sont choisies synchrones avec les premières balises. Autrement dit, bien que les premières et les secondes balises soient émises sur des canaux différents, elles le sont toujours dans une relation temporelle stable. Selon un exemple de réalisation particulier, les premières et secondes balises sont émises aux mêmes instants.

Chaque étiquette à localiser, 130, comporte un émetteur UWB pour émettre en mode broadcast un message de clap dans un intervalle de temps élémentaire qui sera précisé plus loin. Par ailleurs, chaque étiquette 130 comporte un émetteur-récepteur NB adapté à émettre et recevoir un signal bande étroite. En particulier, le récepteur NB est adapté à recevoir le signal bande étoitre émis par le nœud de référence.

Lorsque le signal UWB est émis selon le protocole IEEE 802.15.4a et le signal à bande étroite selon le protocole IEEE 802.15.4, on pourra un chipset implémentant l'émission/réception selon ces deux protocoles. Alternativement, il pourra être avantageux d'utiliser un émetteur/ récepteur bande étroite associé à un émetteur UWB sans récepteur UWB.

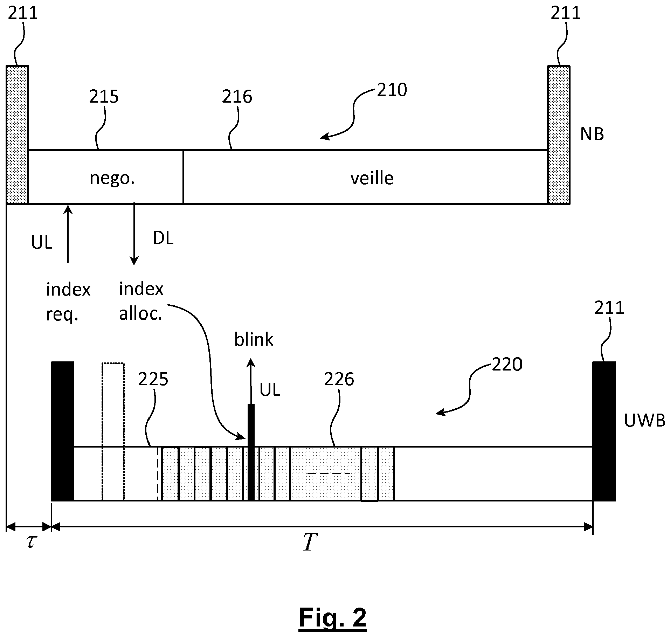

La Fig. 2 représente de manière schématique une supertrame bande étroite, 210, ainsi qu'une supertrame UWB, 220.

La supertrame UWB est délimitée par des premières balises successives 221 émises par l'ancre de référence.

De même, la supertrame bande étroite (NB) est délimitée par des secondes balises successives 211 émises par l'ancre de référence.

Comme indiqué plus haut, la relation temporelle entre les premières et les secondes balises est fixe. Cette relation temporelle fixe peut être due à un rapport entier entre les longueurs des supertrames et/ou à un retard fixe entre les supertrames. Dans l'exemple représenté sur la Fig. 2, on a supposé que les supertrames 210 et 200 avaient la même durée et étaient simplement décalées d'un retard *τ*.

Une première période (dite période de négociation), 215, de la supertrame bande étroite, est dédiée à la négociation d'un index d'intervalle élémentaire pour l'émission d'un message de clap. Plus précisément, pendant cette période, chaque étiquette peut requérir de l'ancre de référence qu'elle lui alloue un index d'intervalle élémentaire au sein de la supertrame UWB. Il convient de noter que le message d'allocation d'index n'est pas nécessairement envoyé au cours de la même supertrame bande étroite comme représenté sur la figure, mais peut être éventuellement envoyé pendant la période de négociation de la supertrame suivante voire d'une supertrame ultérieure. Dès lors que l'étiquette a reçu un message d'allocation d'index ou que la période de négociation 215 de la supertrame est terminée, l'étiquette met en veille son récepteur bande étroite jusqu'à la balise suivante. Alternativement, dès lors que l'étiquette a reçu un message d'allocation d'index, l'étiquette peut mettre en veille (c'est-à-dire inactive) son récepteur bande étroite pour un nombre prédéterminé de supertrames. Ce sera notamment le cas si l'index de trame élémentaire est alloué à l'étiquette pour une durée prédéterminée : l'étiquette ne réactive alors son récepteur bande étroite qu'après que cette durée se soit écoulée ou, de manière équivalente, qu'après un nombre correspondant de supertrames.

En tout état de cause, les étiquettes mettent leur récepteur bande étroite en veille pendant la seconde période 216 de la supertrame 210. Ainsi, le récepteur bande étroite de l'étiquette ne consomme que peu d'énergie. En outre l'énergie consommée pendant que le récepteur bande étroite est activé est sensiblement inférieure à celle qui aurait été consommée par un récepteur UWB pendant la même période. En effet, un récepteur UWB est sensiblement plus complexe et gourmand en énergie qu'un récepteur à bande étroite (par ex. un récepteur conforme au standard 802.15.4 à 2,4 GHz).

La supertrame UWB, 220, comprend une première période 225 pendant laquelle les ancres coordinatrices peuvent transmettre leurs balises. Dans le cas illustré, l'ancre de référence étant seule ancre coordinatrice, la période 225 ne comporte qu'une seule balise. Cette première période est suivie d'une seconde période divisée en intervalles élémentaires, chaque intervalle élémentaire étant associé à un index. Lorsqu'un index d'intervalle élémentaire est alloué à l'étiquette, celle-ci peut émettre un message de clap dans l'intervalle élémentaire. Le message de clap est un message UWB constitué d'un train de très brèves impulsions, généralement codées, qui se prête bien à des mesures de distance. De manière avantageuse, lorsque plusieurs ancres coordinatrices sont présentes dans le réseau, chaque ancre coordinatrice peut se voir attribuer la gestion d'un sous-ensemble d'index, les index d'un même sous-ensemble correspondant à des intervalles élémentaires séparés par une durée de garde prédéterminée. Ainsi, des étiquettes dont les index sont gérés par la même ancre coordinatrice émettront leurs messages de clap en des instants suffisamment espacés temporellement pour écarter tout risque de collision. Le cas échéant, lorsque deux ancres coordinatrices sont suffisamment distantes l'une de l'autre, les sous-ensembles d'index dont elles ont respectivement la gestion pourront présenter une intersection non vide. En d'autres termes, des index d'intervalles élémentaires pourront être réutilisés pour allocation lorsque le risque de collision entre messages est faible.

On comprend que la requête et l'allocation d'index sont réalisées via le canal auxiliaire pendant une période de négociation au lieu d'être réalisées pendant la période relativement courte, 225, dédiée aux balises dans la trame UWB. On peut ainsi supporter la localisation d'un grand nombre d'étiquettes.

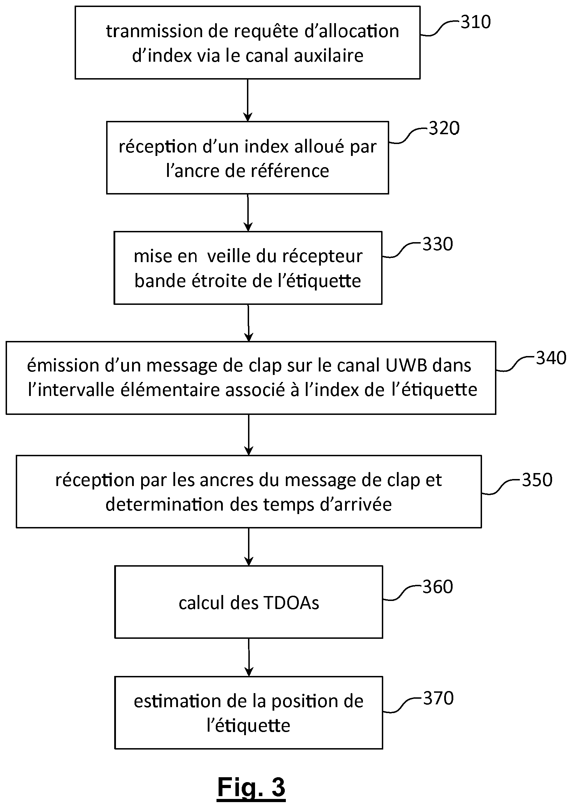

La Fig. 3 représente un organigramme de la méthode de localisation d'une étiquette selon un premier mode de réalisation de l'invention.

La méthode de localisation utilise un réseau de capteurs comme décrit en relation avec la Fig. 1.

L'ancre de référence transmet un signal UWB comprenant à intervalles réguliers des premières balises, l'intervalle entre deux premières balises successives définissant une première trame temporelle ou supertrame UWB telle que décrite en relation avec la Fig. 2.

On rappelle que ces balises permettent la synchronisation des ancres.

De même, l'ancre de référence transmet un signal à bande étroite sur un canal auxiliaire, le signal à bande étroite comprenant des secondes balises à intervalles réguliers, l'intervalle entre deux secondes balises successives définissant une seconde trame temporelle ou supertrame bande étroite telle que décrite en relation avec la Fig. 2.

On suppose que l'étiquette a été préalablement associée au réseau de manière connue en soi. Cette association peut avoir lieu via le canal UWB ou bien, avantageusement, via le canal auxiliaire bande étroite.

Lors de l'association, l'étiquette peut récupérer les paramètres du réseau, notamment la période de récurrence des supertrames UWB et des supertrames bande étroite et, le cas échéant le décalage temporel *τ* entre ces trames.

A l'étape 310, l'étiquette transmet à l'ancre de référence (ou à l'ancre coordinatrice), via le canal auxiliaire, une requête d'allocation d'intervalle élémentaire pendant une période de négociation.

A l'étape 320, l'étiquette reçoit de l'ancre de référence (ou de l'ancre coordinatrice), via le canal auxiliaire, un index d'intervalle élémentaire.

A l'étape 330, l'étiquette met en veille son récepteur bande étroite pendant une durée prédéterminée.

A l'étape 340, l'étiquette émet un message de clap dans l'intervalle élémentaire (de la supertrame UWB) correspondant à l'index qui lui a été précédemment alloué. Cette émission peut être répétée à chaque supertrame UWB postérieure à l'allocation de l'index, pendant une période prédéterminée de validité de l'allocation.

A l'étape 350, les ancres à portée de l'étiquette reçoivent le message de clap et déterminent leurs temps d'arrivée respectifs au moyen de leurs horloges locales. Elles transmettent ensuite ces temps d'arrivée à l'ancre de référence (ou à l'ancre coordinatrice) voire à un serveur distant.

A l'étape 360, on calcule les différences de temps d'arrivée du message de clap, compte tenu des relations de synchronisation entre les ancres. Pour ce faire, on pourra notamment convertir les temps d'arrivée mesurés par les horloges locales en des temps d'arrivée mesurés par l'horloge de référence, puis calculer les différences de temps d'arrivée.

A l'étape 370, on estime la position de l'étiquette à partir des positions (connues) des ancres et des différences de temps d'arrivée (TDOA). Cette estimation de position par TDOA est bien connue en soi et ne sera pas détaillée ici.

Les étapes 360 et 370 pourront être effectuées par l'ancre de référence (plus généralement l'ancre coordinatrice) ou le serveur distant selon l'entité en charge de la localisation.

Il est important de noter que la méthode de localisation décrite ci-dessus ne nécessite pas que l'étiquette dispose d'un récepteur UWB. Il est ainsi possible d'économiser l'énergie dépensée par l'étiquette et d'accroître son autonomie. De manière pratique, les étiquettes pourront être ainsi alimentées par de simples piles boutons.

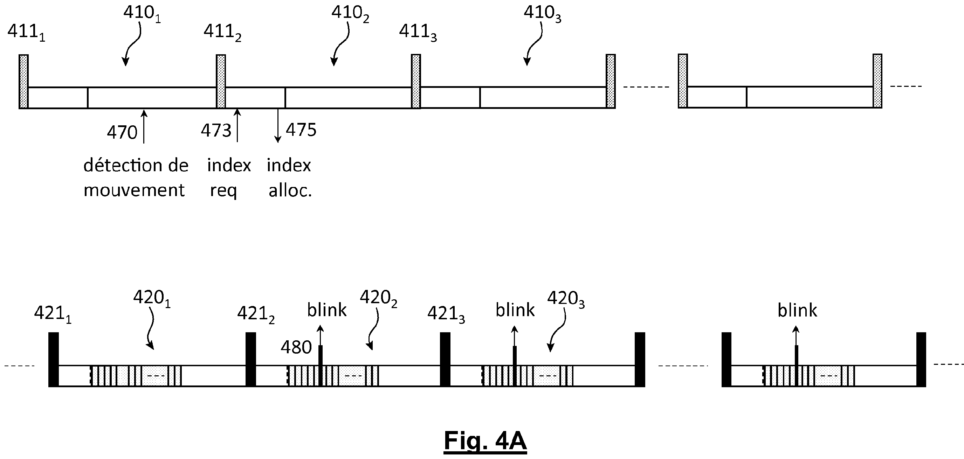

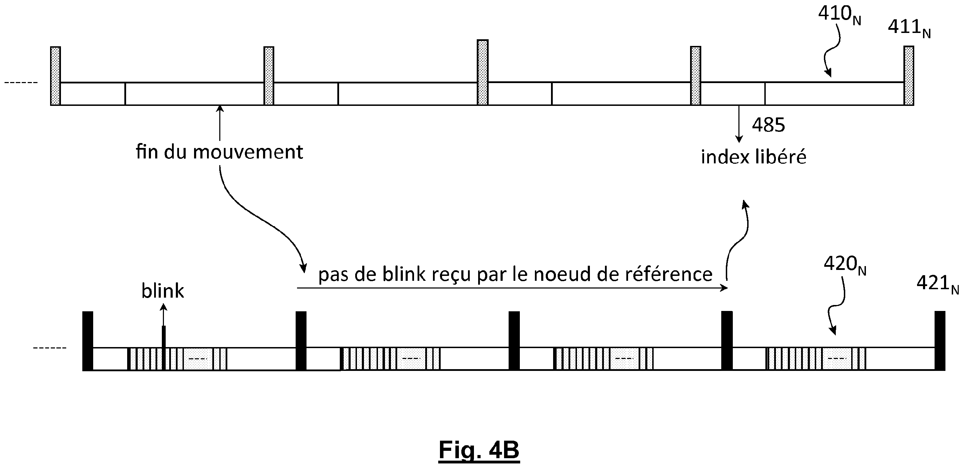

Les Fig. 4A et 4B représentent schématiquement des séquences de supertrames UWB et de supertrames bande étroite pour une méthode de localisation selon un second mode de réalisation de l'invention. Les séquences de supertrames de la Fig. 4B font suite aux séquences de supetrames de la Fig. 4A.

On a représenté en 410₁,...,410_{N} les supertrames bande étroite successives et en 420₁,...,420_{N} les supertrames UWB. On a noté 411₁,...,411_{N} les balises du canal auxiliaire et 421₁,...,421_{N} les balises du canal UWB.

On suppose ici que l'étiquette est équipée d'un dispositif de détection de mouvement. Le mouvement étant rarement linéaire et à vitesse constante, on pourra utiliser pour ce faire un accéléromètre, par exemple un accéléromètre MEMS.

**En** 470, le dispositif de détection détecte un mouvement de l'étiquette. Celle-ci requiert alors en 473 (via le canal auxiliaire), pendant la première période de négociation suivante, un index d'intervalle élémentaire à l'ancre de référence. Un index lui est attribué (via le canal auxiliaire) en 475, ici pendant la même période de négociation. L'étiquette désactive alors son récepteur bande étroite aussitôt après.

Parallèlement, dès lors que l'étiquette s'est vu allouer un index d'intervalle élémentaire, celle-ci émet en 480 un message de clap dans le premier intervalle élémentaire correspondant à cet index faisant suite à un signal de balise, soit 421₂ dans l'exemple illustré. Elle continue à émettre ses messages de clap lors des supertrames UWB suivantes, toujours dans le même intervalle élémentaire correspondant à l'index qui lui a été alloué.

Lorsqu'aucun mouvement n'a été détecté par le détecteur de mouvement pendant un premier intervalle de temps de durée déterminée, l'étiquette cesse de transmettre ses messages de clap.

Lorsque l'ancre de référence (ou l'ancre coordinatrice en charge de l'étiquette) détecte qu'aucun message de clap n'a été détecté pendant un second intervalle de temps de durée déterminée, celle-ci libère l'index d'intervalle intermédiaire en 485. Si l'étiquette se remet ultérieurement en mouvement, elle doit alors transmettre une nouvelle requête d'allocation d'intervalle élémentaire pour émettre un message de clap.

On pourra prévoir qu'une nouvelle requête d'allocation ne sera transmise à l'ancre de référence que si son mouvement n'a été détecté sur un laps de suffisamment long, de manière à éviter l'envoi de requêtes intempestives.

## Revendications

1. Méthode de localisation d'une étiquette par un réseau de capteurs, le réseau de capteurs comprenant une ancre de référence et une pluralité d'ancres synchronisées avec ladite ancre de référence, l'ancre de référence émettant un signal Ultra Wide Band, UWB, comprenant des premières balises à intervalles réguliers, l'intervalle entre deux premières balises successives définissant une première trame temporelle comprenant des intervalles de temps élémentaires pendant lesquels les capteurs et l'étiquette peuvent accéder à un canal UWB, ladite méthode comprenant en outre:
- la transmission par l'ancre de référence d'un signal à bande étroite sur un canal auxiliaire, le signal à bande étroite comprenant des secondes balises à intervalles réguliers, l'intervalle entre deux secondes balises successives définissant une seconde trame temporelle, les secondes balises étant synchrones avec les premières balises, l'ancre de référence transmettant pendant la seconde trame temporelle un index d'intervalle élémentaire à ladite étiquette ;
- la réception (320) par ladite étiquette dudit index sur le canal auxiliaire et la transmission (340) par celle-ci d'un message de clap, c'est-à-dire une impulsion ou un message bref, sur le canal UWB pendant un intervalle élémentaire associé audit index ;
- la réception (350) par lesdites ancres du message de clap et la détermination (360) des différences de temps d'arrivée de ce message aux différentes ancres ;
- le calcul (370) de la position de l'étiquette à partir des différences de temps d'arrivée ainsi déterminées.

2. Méthode de localisation d'une étiquette par un réseau de capteurs selon la revendication 1, **caractérisée en ce que** ladite étiquette est équipée d'un émetteur/ récepteur bande étroite adapté à émettre/ recevoir sur le canal auxiliaire et met en veille (330) son récepteur bande étroite après avoir reçu l'index d'intervalle élémentaire alloué par l'ancre de référence.

3. Méthode de localisation d'une étiquette par un réseau de capteurs selon la revendication 1 ou 2, **caractérisée en ce que** ladite étiquette est équipée d'un émetteur UWB sans récepteur UWB associé.

4. Méthode de localisation d'une étiquette par un réseau de capteurs selon la revendication 1, **caractérisée en ce que** ladite étiquette est équipée d'un détecteur de mouvement et que celle-ci transmet une requête d'index d'intervalle élémentaire au nœud de référence lorsqu'un mouvement de l'étiquette est détecté.

5. Méthode localisation d'une étiquette par un réseau de capteurs selon la revendication 4, **caractérisée en ce que** ladite étiquette n'émet la requête d'index d'intervalle élémentaire que si ledit mouvement dure plus d'un laps de temps prédéterminé.

6. Méthode de localisation d'une étiquette par un réseau de capteurs selon l'une des revendications précédentes, **caractérisée en ce que** si l'ancre de référence ne reçoit pas de messages de clap de l'étiquette pendant un intervalle de durée prédéterminée, l'ancre de référence libère l'index d'intervalle élémentaire alloué à l'étiquette.

7. Méthode de localisation d'une étiquette par un réseau de capteurs selon l'une des revendications précédentes, **caractérisée en ce que** le signal UWB est conforme à la couche physique normalisée par le standard IEEE 802.15.4a et que les accès au canal UWB sont conformes à la couche MAC normalisée par ce standard.

8. Méthode de localisation d'une étiquette par un réseau de capteurs selon l'une des revendications précédentes, **caractérisée en ce que** le signal à bande étroite est conforme à la couche physique normalisée par le standard IEEE 802.15.4 à 2.4 GHz et que les accès au canal auxiliaire sont conformes à la couche MAC normalisée par ce standard.

9. Méthode de localisation d'une étiquette par un réseau de capteurs selon l'une des revendications 1 à 7, **caractérisée en ce que** le signal à bande étroite est un signal RFID.

10. Méthode de localisation d'une étiquette par un réseau de capteurs selon l'une des revendications 1 à 7, **caractérisée en ce que** le signal à bande étroite est un signal Bluetooth Low Energy.

## Patentansprüche

1. Verfahren zum Lokalisieren eines Tags durch ein Sensornetzwerk, wobei das Sensornetzwerk einen Referenzanker und eine Vielzahl von mit dem Referenzanker synchronisierten Ankern umfasst, wobei der Referenzanker ein UWB-Signal (Ultra Wide Band) ausgibt, das erste Baken in regelmäßigen Intervallen umfasst, wobei das Intervall zwischen zwei aufeinander folgenden ersten Baken einen ersten Zeitrahmen definiert, der elementare Zeitintervalle umfasst, während denen die Sensoren und das Tag auf einen UWB-Kanal zugreifen können, wobei das Verfahren ferner umfasst:
- Übertragen eines schmalbandigen Signals auf einem Hilfskanal durch den Referenzanker, wobei das schmalbandige Signal zweite Baken in regelmäßigen Intervallen aufweist, wobei das Intervall zwischen zwei aufeinanderfolgenden zweiten Baken einen zweiten Zeitrahmen definiert, wobei die zweiten Baken synchron mit den ersten Baken sind, wobei der Referenzanker während des zweiten Zeitrahmens einen Elementarintervallindex zu dem genannten Tag überträgt;
- Empfangen (320) des Index durch das Tag auf dem Hilfskanal und Übertragen (340) einer Clap-Nachricht, d. h. eines Impulses oder einer Kurznachricht, durch das genannte Tag auf dem UWB-Kanal während eines dem Index zugeordneten elementaren Intervalls;
- Empfangen (350) der Clap-Nachricht durch die genannten Anker und Ermitteln (360) der Differenzen in der Ankunftszeit dieser Nachricht an den verschiedenen Ankern;
- Berechnen (370) der Position des Tags aus den so ermittelten Differenzen der Ankunftszeiten.

2. Verfahren zur Lokalisierung eines Tags durch ein Sensornetzwerk nach Anspruch 1, **dadurch gekennzeichnet, dass** das Tag mit einem schmalbandigen Sender/Empfänger ausgestattet ist, der auf dem Hilfskanal senden/empfangen kann und seinen schmalbandigen Empfänger in Bereitschaft (330) setzt, nachdem er den vom Referenzanker zugewiesenen Elementarintervallindex empfangen hat.

3. Verfahren zum Lokalisieren eines Tags durch ein Sensornetzwerk nach Anspruch 1 oder 2, **dadurch gekennzeichnet, dass** das Tag mit einem UWB-Sender ohne zugehörigen UWB-Empfänger ausgestattet ist.

4. Verfahren zum Lokalisieren eines Tags durch ein Sensornetzwerk nach Anspruch 1, **dadurch gekennzeichnet, dass** das Tag mit einem Bewegungsdetektor ausgestattet ist und dass es eine Elementarintervallindex-Anforderung an den Referenzknoten sendet, wenn eine Bewegung des Tags detektiert wird.

5. Verfahren zum Lokalisieren eines Tags durch ein Sensornetzwerk nach Anspruch 4, **dadurch gekennzeichnet, dass** das Tag die Elementarintervallindex-Anforderung nur dann sendet, wenn die Bewegung länger als eine vorbestimmte Zeitdauer dauert.

6. Verfahren zum Lokalisieren eines Tags durch ein Sensornetzwerk nach einem der vorhergehenden Ansprüche, **dadurch gekennzeichnet, dass** dann, wenn der Referenzanker während eines Intervalls von vorbestimmter Dauer keine Clap-Nachrichten von dem Tag empfängt, der Referenzanker den dem Tag zugewiesenen Elementarintervallindex freigibt.

7. Verfahren zur Lokalisierung eines Tags durch ein Sensornetzwerk nach einem der vorhergehenden Ansprüche, **dadurch gekennzeichnet, dass** das UWB-Signal mit der durch die Norm IEEE 802.15.4a standardisierten physikalischen Schicht übereinstimmt und die Zugriffe auf den UWB-Kanal mit der durch diese Norm standardisierten MAC-Schicht übereinstimmen.

8. Verfahren zur Lokalisierung eines Tags durch ein Sensornetzwerk nach einem der vorhergehenden Ansprüche, **dadurch gekennzeichnet, dass** das schmalbandige Signal mit der physikalischen Schicht übereinstimmt, die durch die Norm IEEE 802.15.4 bei 2,4 GHz standardisiert ist, und dass die Zugriffe auf den Hilfskanal mit der MAC-Schicht übereinstimmen, die durch diese Norm standardisiert ist.

9. Verfahren zur Lokalisierung eines Tags durch ein Sensornetzwerk nach einem der Ansprüche 1 bis 7, **dadurch gekennzeichnet, dass** das schmalbandige Signal ein RFID-Signal ist.

10. Verfahren zur Lokalisierung eines Tags durch ein Sensornetzwerk nach einem der Ansprüche 1 bis 7, **dadurch gekennzeichnet, dass** das schmalbandige Signal ein Bluetooth Low Energy-Signal ist.

## Claims

1. A method for locating a tag by a sensor network, the sensor network comprising a reference anchor and a plurality of anchors synchronised with said reference anchor, the reference anchor emitting a Ultra Wide Band, UWB, signal, comprising
first beacons at regular intervals, the interval between two first successive beacons defining a first time frame comprising elementary time intervals during which the sensors and the tag can access to UWB channel, said method further comprising:
- transmitting by the reference anchor a narrowband signal on an auxiliary channel, the narrowband signal comprises second beacons at regular intervals, the interval between two second successive beacons defining a second time frame, the second beacons being synchronous with the first beacons, the reference anchor transmitting during the second time frame an elementary interval index to said tag;
- receiving (320) by said tag said index on the auxiliary channel and transmitting (340) by the same a clap message, that is a pulse or a brief message, on the UWB channel during an elementary interval associated with said index;
- receiving (350) by said anchors the clap message and determining (360) time differences of arrival of this message to the different anchors;
- calculating (370) the position of the tag from the time differences of arrival thus determined.

2. The method for locating a tag by a sensor network according to claim 1, **characterised in that** said tag is equipped with a narrowband transmitter/receiver adapted to transmit/receive on the auxiliary channel and puts (330) its narrowband receiver in standby after it has received the elementary interval index allocated by the reference anchor.

3. The method for locating a tag by a sensor network according to claim 1 or 2, **characterised in that** said tag is equipped with a UWB transmitter without a UWB receiver associated therewith.

4. The method for locating a tag by a sensor network according to claim 1, **characterised in that** said tag is equipped with a motion sensor and it transmits an elementary interval index request to the reference node when a motion of the tag is detected.

5. The method for locating a tag by a sensor network according to claim 4, **characterised in that** said tag emits the elementary interval index request only if said motion lasts more than a predetermined period of time.

6. The method for locating a tag by a sensor network according to one of preceding claims, **characterised in that** if the reference anchor does not receive clap messages of the tag during a predetermined duration interval, the reference anchor releases the elementary interval index allocated to the tag.

7. The method for locating a tag by a sensor network according to one of preceding claims, **characterised in that** the UWB signal is in accordance with the physical layer standardised by IEEE 802.15.4a standard and accesses to the UWB channel are in accordance with the MAC layer standardised by this standard.

8. The method for locating a tag by a sensor network according to one of preceding claims, **characterised in that** the UWB signal is in accordance with the physical layer standardised by IEEE 802.15.4a standard at 2.4GHz and accesses to the UWB channel are in accordance with the MAC layer standardised by this standard.

9. The method for locating a tag by a sensor network according to claims 1 to 7, **characterised in that** the narrowband signal is a RFID signal.

10. The method for locating a tag by a sensor network according to claims 1 to 7, **characterised in that** the narrowband signal is a Bluetooth Low Energy signal.
